# EUROPÄISCHE PATENTSCHRIFT

(11) **EP 1 669 147 B1**
(45) Veröffentlichungstag und Bekanntmachung des Hinweises auf die Patenterteilung: **25.03.2009**
(21) Anmeldenummer: 04029442.3
(22) Anmeldetag: 13.12.2004
(51) Int. Cl.: B23B 31/02

(54) **Spanneinrichtung**
Clamping Device
Dispositif de serrage

(43) Veröffentlichungstag der Anmeldung: 14.06.2006
(73) Patentinhaber: Schunk GmbH & Co. KG Spann- und Greiftechnik, 74348 Lauffen (DE)
(72) Erfinder: Retzbach Thomas, D-74357 Bönnigheim (DE); Haag Michael, D-74232 Abstatt (DE)
(74) Vertreter: Paul, Dieter-Alfred

(56) Entgegenhaltungen:
- EP-A- 1 342 539
- EP-A- 1 407 846
- WO-A-00/76703
- WO-A-02/28738
- DE-A1- 10 309 015
- DE-C1- 19 827 109
- DE-C1- 19 834 739
- GB-A- 637 357
- GB-A- 1 238 287
- US-A1- 2003 228 199
- PATENT ABSTRACTS OF JAPAN Bd. 017, Nr. 485 (P-1605), 2. September 1993 (1993-09-02) -& JP 05 119546 A (CANON INC), 18. Mai 1993 (1993-05-18)
- "Products - T Plugs" [Online] 16. Juni 2005 (2005-06-16), , XP002332668 Gefunden im Internet: URL:http://www.stockcap.com/prod_detail.as p?id=119&cat=13> [gefunden am 2005-06-16] * das ganze Dokument *

## Beschreibung

Die vorliegende Erfindung betrifft eine Spanneinrichtung zum Spannen von Werkzeugen nach dem Oberbegriff von Anspruch 1.

Spanneinrichtungen dieser Art sind beispielsweise aus der WO 00/76703 bekannt und dienen dazu, einen Werkzeugschaft wie beispielsweise einen Bohrer- oder Fräserschaft an der Arbeitsspindel einer entsprechenden Werkzeugmaschine zu fixieren. Sie werden insbesondere eingesetzt, um kleine Werkzeuge zu spannen.

Bei den aus der WO 00/76703 bekannten Spanneinrichtungen werden die Werkzeuge durch einen Schrumpfsitz gespannt. Sie bestehen hierzu in der Regel aus einem Grundkörper aus Metall, der eine zentrale Aufnahme für den Schaft des zu spannenden Werkzeugs aufweist. Der Durchmesser der Aufnahme ist dabei so bemessen, daß er etwas kleiner ist als der Durchmesser des Werkzeugschaftes. Zum Spannen des Werkzeugs wird der Grundkörper zumindest im Bereich der Aufnahme erwärmt, bis sich diese soweit thermisch ausgedehnt hat, daß der Werkzeugschaft in sie eingesetzt werden kann. Beim abschließenden Abkühlen schrumpft die Aufnahme wieder, so daß der Werkzeugschaft in der Aufnahme durch Preß- oder Schrumpfsitz fixiert wird.

Alternativ können andere Spannmechanismen eingesetzt werden. In Frage kommen beispielsweise die Spannmechanismen der sogenannten Tribos-Spannfutter der Anmelderin, welche in der DE 198 27 109 C1 sowie der DE 198 34 739 A1 beschrieben sind.

Solche Spanneinrichtungen haben sich in der Praxis durch-aus bewährt. Aufgrund der harten Einspannung des Schaftes können im Gebrauch jedoch Abwalkeffekte, die bis zum Bruch des Vollhartmetallschaftes des Werkzeugs führen können, auftreten. Aus diesem Grund wird in der WO 00/76703 vorgeschlagen, um die Aufnahme herum einen ringförmigen Dämpfungshohlraum oder alternativ um die Aufnahme herum verteilt und mit Versatz zueinander angeordnet mehrere Dämpfungshohlräume vorzusehen. Durch diese Ausgestaltung wird die Einspannung des Werkzeugschaftes "weicher" mit der Folge, daß aufgrund einer harten Einspannung des Schaftes auftretende "Kardaneffekte", die zum Werkzeugbruch führen können, ausgeschlossen bzw. weitgehend verhindert werden können.

Als nachteilig wird jedoch angesehen, daß sich in den Dämpfungshohlräumen Späne etc. ansammeln können. Da solche Späneansammlungen in den Dämpfungshohlräumen ungleichmäßig erfolgten, führen sie zwangsläufig zu einer Unwucht, die bei den zum Teil sehr hohen Rotationsgeschwindigkeiten von Werkzeugmaschinen nachteilig sind. Weiterhin gehen die Bestrebungen dahin, die Dämpfungseigenschaften weiter zu verbessern, wobei allerdings die statische Steifigkeit des Grundkörpers bzw. der Spanneinrichtung zumindest im wesentlichen beibehalten werden soll.

Aufgabe der Erfindung ist es daher, eine Spanneinrichtung der eingangs genannten Art so auszugestalten, daß unwuchten im wesentlichen vermieden werden und weiterhin die Dämpfungseigenschaften der Spanneinrichtung unter Beibehaltung der statischen Steifigkeit des Grundkörpers verbessert werden.

Diese Aufgabe ist erfindungsgemäß dadurch gelöst, daß das offene Ende eines jeden Dämpfungshohlraumes durch einen Deckel zumindest teilweise verschlossen ist, der in den jeweiligen Dämpfungshohlraum von der offenen Stirnseite her eingesetzt und in dem Dämpfungshohlraum fixiert ist wobei jeder Deckel als Dämpfungselement ausgebildet und in dem zugehörigen Dämpfungshohlraum frei schwingend aufgehängt ist. Beispielsweise ist es mögliche die Deckel in den zugehörigen Dämpfungshohlräumen jeweils durch wenigstens einen O-Ring oder mehrere O-Ringe frei schwingend zu halten. Der Erfindung liegt die Überlegung zugrunde, gezielt im äußersten Bereich der Werkzeugeinspannung, wo im Betrieb die größten Schwinggeschwindigkeiten auftreten, eine Dämpfung vorzunehmen, und zwar über Dämpfungselemente, welche in den Dämpfungshohlräumen schwingend, das heißt mit Spiel und elastisch abgefedert, angebracht sind, so daß eine Relativbewegung zwischen den Dämpfungselementen - die hier als Deckel ausgebildet sind - und dem Grundkörper stattfinden kann. Damit stellt die erfindungsgemäße Spanneinrichtung einen Mehrmassenschwingen dar, dessen Dämpfungseigenschaften durch Einsatz unterschiedlicher Dämpfungselemente verändert werden kann mit der Folge, daß auf verschiedenste Frequenzen gedämpft und somit die Eigenfrequenz der Spanneinrichtung eingestellt werden kann. Durch eine Variation der Länge L der Dämpfungselemente - in Axialrichtung der Spanneinrichtung betrachtet - läßt sich die Dämpfung fest einstellen. Hierbei ergibt eine kleine Länge L eine niedrigere Dämpfung, während eine größere Länge L eine höhere Dämpfung ergibt. Die variation in der Lage innerhalb des Grundkörpers ergibt ebenfalls eine Veränderung der Dämpfung. Hierbei wird die Dämpfung geringer, je tiefer die Dämpfungselemente in die Spanneinrichtung eingeschoben werden. Weitere Beeinflussungsmöglichkeiten ergeben sich durch die Werkstoffdichte der Dämpfungselemente sowie die Verwendung unterschiedlicher Härten und Anzahlen der Dämpfungselemente. Versuche haben gezeigt, daß sich schon mit kleinen Dämpfungsmassen gute Ergebnisse erzielen lassen. Kleine Massen sind dabei für das rotierende System wichtig, da die Trägheitskräfte beim Beschleunigen und Abbremsen klein gehalten werden können.

Wenn O-Ringe verwendet werden, um die Deckel bzw. Dämpfungselemente in den Dämpfungshohlräumen zu fixieren, können in der Wandung des Deckels und/oder der Wandung des zugehörigen Dämpfungshohlraums Nuten zur Aufnahme der O-Ringe vorgesehen sein. Zusätzlich ist es zweckmäßig, die Deckel in den Dämpfungshohlräumen durch Form- oder Reibschlußverbindungen sicher an einem Herausfallen zu hindern. Zur Bildung einer solchen Formschlußverbindung ist gemäß einer bevorzugten Ausführungsform vorgesehen, daß an den Deckeln federnd nach außen beaufschlagte Rastelemente und in dem zugehörigen Dämpfungshohlraum korrespondierende Ausnehmungen für die Rastelemente ausgebildet sind. In diesem Fall greifen die Rastelemente, die vorzugsweise an gegenüberliegenden Seiten der Deckel vorgesehen sind, elastisch in die grundkörperseitigen Ausnehmungen ein und können zum Lösen elastisch nach innen gedrückt werden.

Gemäß der Erfindung ist vorgesehen, daß jeder Deckel derart ausgebildet und in dem zugehörigen Dämpfungshohlraum fixiert ist, daß die statische Steifigkeit der Spanneinrichtung im wesentlichen nicht beeinflußt wird.

In dem Fall, daß mehrere separate Dämpfungshohlräume um die Aufnahme herum vorgesehen sind, wird ein besonders guter Effekt erzielt, da dann die statische Steifigkeit der Spanneinrichtung praktisch nicht beeinflusst wird, weil diese im wesentlichen über das zwischen den Dämpfungshohlräumen verbleibende Material des Grundkörpers bestimmt wird. Es ist allerdings möglich, die einzelnen Deckel durch schmale Verbindungsstege miteinander zu verbinden und in der Stirnseite des Grundkörpers eine entsprechende Ringnut vorzusehen, in welche die verbindungsstege eingesetzt werden können. Die Verbindung der Deckel über solche Verbindungsstege bringt Vorteile bei der Montage mit sich.

Wenn anstelle von mehreren separaten Dämpfungshohlräumen ein einziger Dämpfungshohlraum vorgesehen ist, welcher die Ausnahme ringförmig umgibt, sollten zweckmäßigerweise zusätzliche Maßnahmen getroffen werden, um eine Beeinflussung der statischen Steifigkeit durch den dann ringförmigen Deckel zu vermeiden. Beispielsweise kann eine Segmentierung des Deckels in dessen Umfangsrichtung vorgesehen werden.

Hinsichtlich weiterer vorteilhafter Ausgestaltung der Erfindung wird auf die Unteransprüche sowie die nachfolgende Beschreibung unter Bezugnahme auf die beiliegende Zeichnung verwiesen. In der Zeichnung zeigt
- Figur 1: im Längsschnitt eine Ausführungsform einer Spanneinrichtung mit nierenförmig ausgebildeten Dämpfungshohlräumen, die nicht gemäß der vorliegenden Erfindung ist.
- Figur 2: die Spanneinrichtung aus Figur 1 im Querschnitt entlang der Linie II-II in Figur 1,
- Figur 3: einen Deckel zum Verschließen der Dämpfungshohlräume für eine Spanneinrichtung gemäß den Figuren 1 und 2 in perspektivischer Darstellung,
- Figur 4: den Deckel aus Figur 3 in Vorderansicht,
- Figur 5: den Deckel aus Figur 3 in Draufsicht,
- Figur 6: den Deckel aus Figur 3 in Seitenansicht,
- Figur 7: im Längsschnitt eine erste Ausführungsform einer Spanneinrichtung gemäß der vorliegenden Erfindung mit nierenförmigen Dämpfungshohlräumen,

- Figur 8: die Spanneinrichtung aus Figur 7 in Draufsicht,
- Figur 9: in Längsschnitt eine Ausführungsform einer Spanneinrichtung gemäß der vorliegenden Erfindung mit axialen Dämpfungsbohrungen,
- Figur 10: die Spanneinrichtung aus Figur 9 in Draufsicht,
- Figur 11: im Längsschnitt eine weitere Ausführungsform einer Spanneinrichtung gemäß der vorliegenden Erfindung mit einem die Aufnahme ringförmig umgebenden Dämpfungshohlraum und
- Figur 12: das Spannfutter aus Figur 11 in Draufsicht.

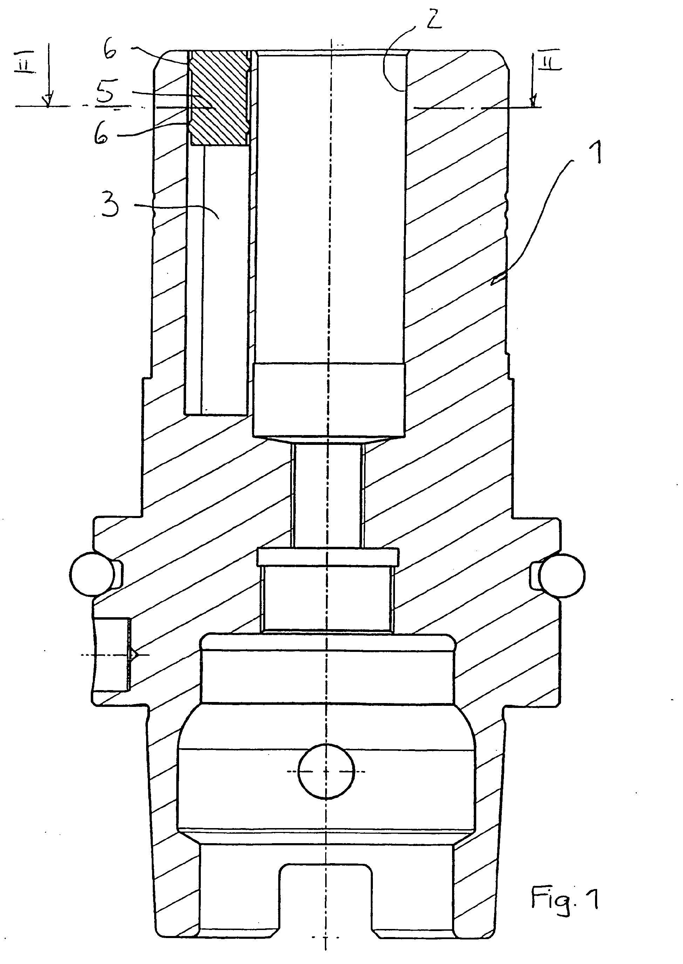

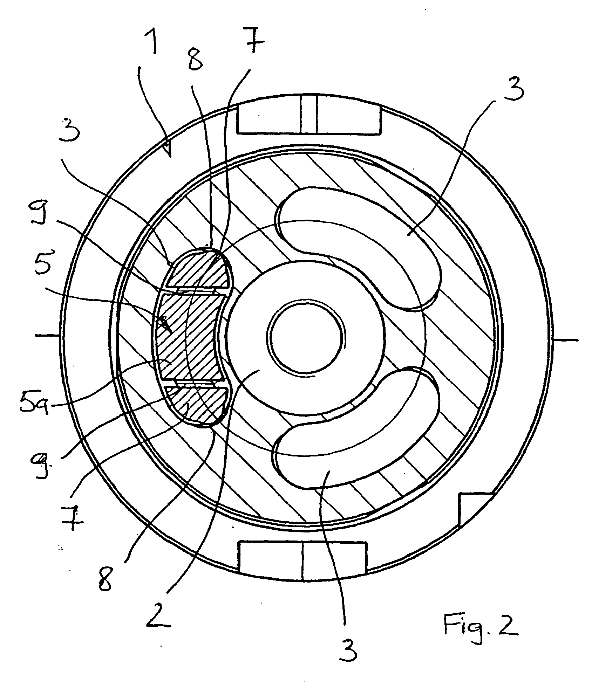

In den Figuren 1 und 2 ist eine Spanneinrichtung zum Spannen von Werkzeugen im Längsschnitt dargestellt, die hier als Spannfutter ausgebildet ist, aber auch beispielsweise direkt in die Arbeitsspindel einer Werkzeugmaschine integriert sein kann. Das Spannfutter umfaßt einen Grundkörper 1 aus einem formsteifen Material wie beispielsweise Stahl, der an seinem einen Endbereich eine zentrale Aufnahme 2 für den zylindrischen Schaft eines zu spannenden Werkzeugs w wie beispielsweise eines Bohrers oder Fräsers aufweist. An seinem anderen Endbereich weist der Grundkörper 1 in an sich bekannter Weise eine Schnittstelle zur Einspannung in die Arbeitsspindel einer Werkzeugmaschine auf.

In dem Grundkörper 1 sind um die Aufnahme 2 herum drei Dämpfungshohlräume 3 gleichmäßig verteilt angeordnet. Die Dämpfungshohlräume 3 sind zur werkzeugseitigen Stirnseite des Grundkörpers 1 hin offen und etwa nierenförmig ausgebildet, wobei ihre aufnahmeseitige Kontur an den Durchmesser der Aufnahme 2 angepaßt ist. Durch diese Dämpfungshohlräume 3 wird erreicht, daß der Grundkörper 1 im Bereich der Einspannstelle weicher wird, so daß im Betrieb auftretende Schwingungen gedämpft werden.

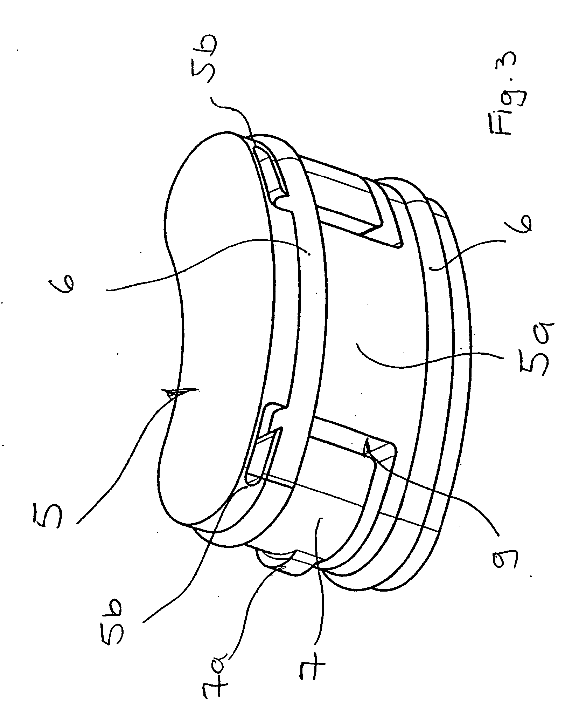

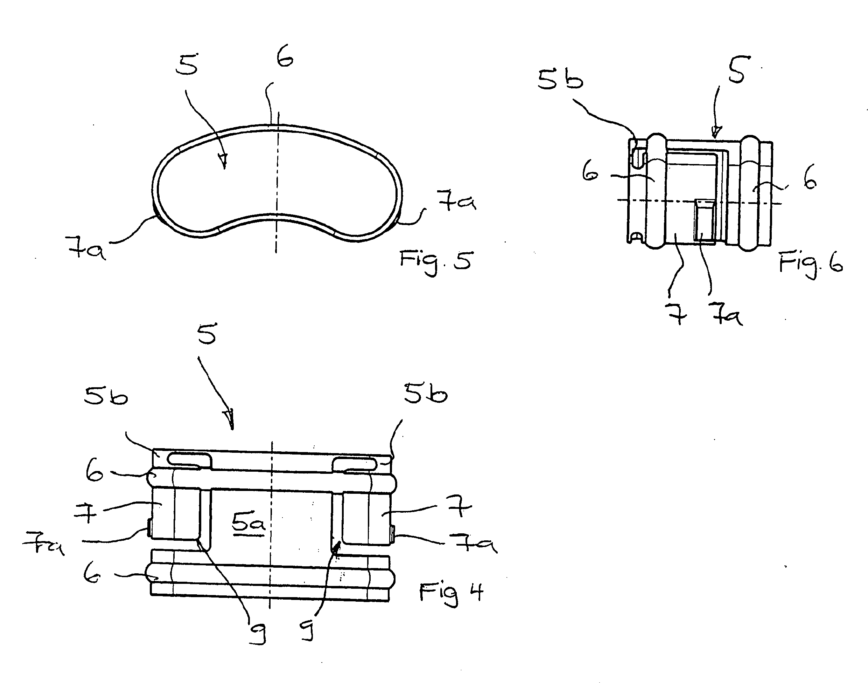

Die offenen Enden der Dämpfungshohlräume 3 sind jeweils durch einen Deckel 5 verschlossen, der in den jeweiligen Dämpfungshohlraum 3 von der offenen Stirnseite her eingesetzt und in dem Dämpfungshohlraum 3 fixiert ist. Wie die Figuren 1 bis 6 gut erkennen lassen, besitzen die Deckel 5 eine an die Dämpfungshohlräume 3 angepaßte Nierenform und sind in den Dämpfungshohlräumen 3 sowohl kraft- als auch formschlüssig gehalten. Hierzu besitzen die Deckel 5, die ansonsten etwas kleiner als die Dämpfungshohlräume 3 ausgebildet sind, zwei nach außen vorstehende, umlaufende Wülste 6, mit denen die Deckel 5 an den Wandungen der Dämpfungshohlräume 3 unter Bildung eines Kraftschlusses in Anlage kommen. Des weiteren sind an den in Längsrichtung der Nierenform einander gegenüberliegenden Endbereichen eines jeden Deckel 5 nach außen vorstehende Rastelemente 7 mit Rastnasen 7a ausgebildet, die mit korrespondierenden Ausnehmungen 8 in der Wandung des zugehörigen Dämpfungshohlraums 3 in Eingriff bringbar sind, um den Deckel 5 in dem Dämpfungshohlraum 3 zu fixieren. Dabei sind die Rastelemente 7 an dem Deckelkörper 5a beweglich gehalten und können elastisch in Ausnehmungen 9 des Deckelkörpers 5a hineinbewegt werden, um den Deckel 5 zu montieren bzw. zu demontieren. In der dargestellten Ausführungsform sind die Rastelemente 7 an den Deckelkörper 5a angeformt und mit diesem über ein Festkörpergelenk 5b verbunden.

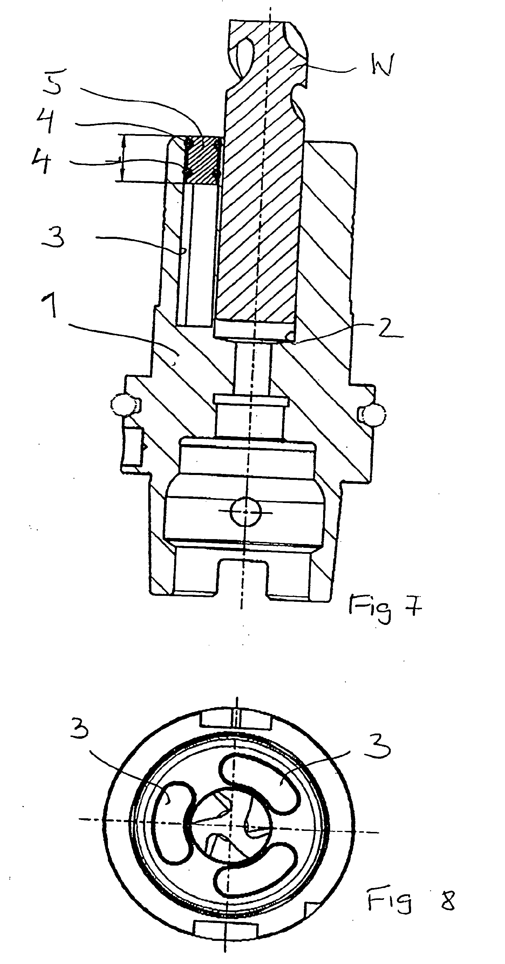

Die Figuren 7 und 8 zeigen eine Ausführungsform einer erfindungsgemäßen Spanneinrichtung, welche der zuvor beschriebenen Spanneinrichtung im wesentlichen entspricht. Der wesentliche Unterschied besteht darin, daß die umlaufenden Wülste 6 an dem Deckel 5 ersetzt sind durch O-Ringe 4, die in entsprechende Umfangsnuten in der Deckelwandung einerseits und der Dämpfungshohlraumwandung andererseits eingesetzt sind. Mit anderen Worten sind bei der zweiten Ausführungsform die Deckel 5 in den Dämpfungshohlräumen 3 über die O-Ringe 4 elastisch aufgehängt, und da - wie zuvor erläutert - die Deckel 5 in den Dämpfungshohlräume 3 mit Spiel eingesetzt sind, können sie in den Dämpfungshohlräumen 3 frei schwingen.

Bei dieser erfindungsgemäßen Spanneinrichtung bilden die Deckel 5 Dämpfungselemente, welche gegenüber dem Grundkörper 1 Relativbewegungen ausführen können. Damit stellt die erfindungsgemäße Spanneinrichtung 1 einen Mehrmassenschwinger dar, dessen Dämpfungseigenschaften durch Einsatz unterschiedlicher Dämpfungselemente 5 verändert werden können mit der Folge, daß auf verschiedenste Frequenzen gedämpft und somit die Eigenfrequenz der Spanneinrichtung eingestellt werden kann. Durch eine Variation der Länge L der an Dekkel 5 ausgebildeten Dämpfungselemente - in Axialrichtung des Spannfutters betrachtet - läßt sich die Dämpfung fest einstellen. Hierbei ergibt eine kleine Länge L eine niedrigere Dämpfung, während eine große Länge L eine höhere Dämpfung ergibt. Die Variation in der Lage innerhalb des Grundkörpers 1 ergibt ebenfalls eine Veränderung der Dämpfung. Hierbei wird die Dämpfung geringer, je tiefer die Dämpfungselemente in die Spanneinrichtung eingeschoben werden. Weitere Beeinflussungsmöglichkeiten ergeben sich durch die Werkstoffdichte der Dämpfungselemente sowie die Verwendung unterschiedlicher Härten und Anzahlen von Dämpfungselementen.

Dabei erfolgt die Dämpfung gezielt im äußersten Bereich der Werkzeugeinspannung, wo im Betrieb die größten Schwinggeschwindigkeiten auftreten.

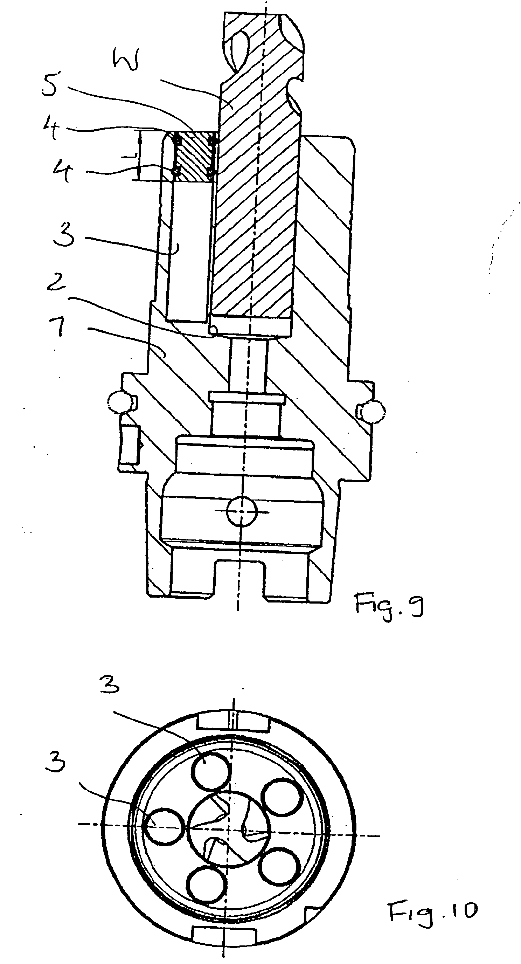

In den Figuren 9 und 10 ist eine zweite Ausführungsform der Erfindung dargestellt. Diese entspricht der zuvor unter Bezugnahme auf die Figuren 7 und 8 erläuterten ersten Ausführungsform mit dem einzigen Unterschied, daß anstelle von drei nierenförmigen Dämpfungshohlräumen 3 um die Aufnahme 2 herum verteilt fünf Dämpfungsbohrungen 3 vorgesehen und die Deckel 5 entsprechend rund ausgebildet sind.

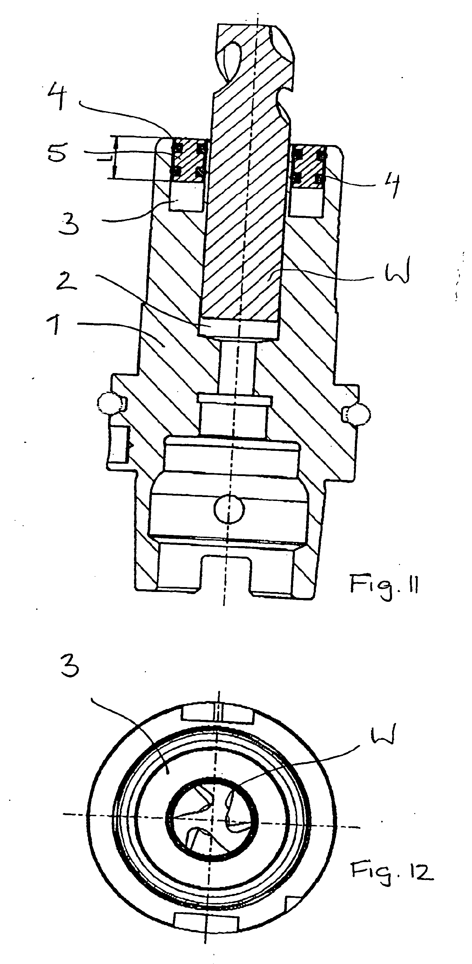

Bei der in den Figuren 11 und 12 dargestellten dritten Ausführungsform der Erfindung ist schließlich ein einziger, die Aufnahme 2 umgebender ringförmiger Dämpfungshohlraum 3 vorgesehen und der Deckel 5 entsprechend auch kreisrund ausgebildet.

## Patentansprüche

1. spanneinrichtung zum Spannen von Werkzeugen mit einem Grundkörper (1), in dem eine zentrale Aufnahme (2) für den Schaft eines zu spannenden Werkzeugs (W) sowie ein die Aufnahme (2) umgebender, ringförmiger Dämpfungshohlraum (3) oder mehrere um die Aufnahme (2) herum verteilt und mit Versatz zueinander angeordnete Dämpfungshohlräume (3) ausgebildet sind, wobei jeder Dämpfungshohlraum (3) zur werkstticksseitigen Stirnfläche (1a) des Futterkörpers (1) hin offen ist, **dadurch gekennzeichnet, daß** das offene Ende eines jeden Dämpfungshohlraumes (3) durch einen Deckel (5) zumindest teilweise verschlossen ist, der in den jeweiligen Dämpfungshohlraum (3) von der offenen Stirnseite her eingesetzt und in dem Dämpfungshohlraum (4) fixiert ist, wobei jeder Deckel (5) als Dämpfungselement ausgebildet und in dem zugehörigen Dämpfungshohlraum (3) frei schwingend aufgehängt ist.

2. Spanneinrichtung nach Anspruch 1, **dadurch gekennzeichnet, daß** jeder Deckel (5) in dem zugehörigen Dämpfungshohlraum (3) durch wenigstens einen O-Ring (4) schwingend gehalten ist.

3. Spanneinrichtung nach Anspruch 2, **dadurch gekennzeichnet, daß** in der wandung des Deckels (5) und/oder der Wandung des zugehörigen Dämpfunghohlraumes (3) Nuten zur Aufnahme der O-Ringe (4) vorgesehen sind.

4. Spanneinrichtung nach einem der vorherigen Ansprüche, **dadurch gekennzeichnet, daß** jeder Deckel (5) in dem zugehörigen Dämpfungshohlraum (3) durch eine Formschlußverbindung gehalten ist.

5. Spanneinrichtung nach Anspruch 4, **dadurch gekennzeichnet, daß** an dem Deckel (5) federnd nach außen beaufschlagte Rastelemente (7) und in dem zugehörigen Dämpfungshohlraum (4) korrespondierende Ausnehmungen (8) für die Rastelemente (7) ausgebildet sind.

## Claims

1. A clamping device for clamping workpieces, which comprises a base body (1) in which a centre holding fixture (2) for the shank of a tool (W) to be clamped and an annular damping cavity (3) surrounding said holding fixture (2) or a plurality of damping cavities (3) arranged around said holding fixture (2) and set off from each other are configured, every damping cavity (3) being open towards the front face (1a) of the chuck base body (1) facing the workpiece, **characterised in that** the open end of every damping cavity (3) is at least partially closed (5) by respective covers (5) which are inserted into the respective damping cavity (3) from the open front face and are fixed inside the damping cavity (4), wherein every cover (5) is designed as a damping element and is suspended such as to oscillate freely in the corresponding damping cavity (3).

2. The clamping device according to Claim 1, **characterised in that** every cover (5) is held, oscillating, in the corresponding damping cavity (3) by at least one O-ring (4).

3. The clamping device according to Claim 2, **characterised in that** grooves for accommodating the O-rings (4) are provided in the wall of the cover (5) and/or the wall of the corresponding damping cavity (3).

4. The clamping device according to any of the preceding claims, **characterised in that** every cover (5) is held in the corresponding damping cavity (3) by a form fit connection.

5. The clamping device according to Claim 4, **characterised in that** outwardly sprung engaging elements (7) are formed on the cover (5) and corresponding recesses (8) for the engaging elements (7) are formed in the corresponding damping cavity (4).

## Revendications

1. Dispositif de serrage pour serrer des outils avec un corps d'outil (1), dans lequel un logement central (2) pour la tige de l'outil à serrer (W) ainsi qu'une ou plusieurs cavités d'amortissement (3) en forme d'anneau entourant le logement ou bien dispersés autour du logement (2) et des cavités d'amortissement (3) disposés entre elles avec une variation sont formés, où chaque cavité d'amortissement (3) est ouverte vers le côté outil de la surface de contact (1a) du corps de mandrin (1), **caractérisé en ce que** l'extrémité ouverte de chaque cavité d'amortissement (3) est fermée du moins partiellement par un couvercle (5), lequel est introduit dans la cavité d'amortissement (3) respective de la face ouverte et fixé dans la cavité d'amortissement (4), où chaque couvercle (5) est constitué en élément d'amortissement et est suspendu oscillant librement dans la cavité d'amortissement (3) correspondante.

2. Dispositif de serrage d'après revendication 1, **caractérisé en ce que**, chaque couvercle (5) est maintenu oscillant dans la cavité d'amortissement correspondante (3) par au moins un anneau O (4).

3. Dispositif de serrage d'après revendication 2, **caractérisé en ce que**, dans la paroi du couvercle (5) et/ou dans la paroi de cavité d'amortissement correspondante (3), des cannelures pour le logement des anneaux O (4) sont prévues.

4. Dispositif de serrage d'après l'une des revendications précédentes, **caractérisé en ce que**, chaque couvercle (5) est maintenu dans la cavité d'amortissement correspondante (3) par un procédé d'accouplement mécanique.

5. Dispositif de serrage d'après revendication 4, **caractérisé en ce que**, sur le couvercle (5), des éléments de fixation faisant ressort vers l'extérieur (7), et dans la cavité d'amortissement qui va avec (4) des entailles correspondantes (8) pour les éléments de fixation (7) sont constitués.
